# EUROPEAN PATENT APPLICATION

(11) **EP 4 834 803 A1**
(43) Date of publication of application: **04.11.2026**
(21) Application number: 25173548.6
(22) Date of filing: 30.04.2025
(51) Int. Cl.: B65G 1/137, B65G 1/04

(54) **PORT**

(71) Applicant: AutoStore Technology AS, 5578 Nedre Vats (NO)
(72) Inventor: JOSHI, Parth, 5578 Nedre Vats (NO); FJELDHEIM, Ivar, 5578 Nedre Vats (NO); VISHNUBHATLA, Subbu, 5578 Nedre Vats (NO); WARDEN, Benjamin, 5578 Nedre Vats (NO)
(74) Representative: Kilburn & Strode LLP

(57) **Abstract**

The disclosure relates to a port (130, 132) for use with an automated storage and retrieval system, the port comprising: a bin receiving area (502) configured to receive a bin (112); a camera (506) located above the receiving area and directed towards the receiving area; and a computer system (600) configured to: detect the presence of a bin in the receiving area; responsive to detecting the presence of a bin in the receiving area, receive a signal from the camera, the signal indicative of contents of the bin; analyse the signal to detect an anomaly associated with the contents of the bin; determine, based on the anomaly, an action to take; and issuing a control command to implement the action.

## Description

### TECHNICAL FIELD

The disclosure relates to a port for use with an automated storage and retrieval system, to an associated method, and to an associated computer-readable medium.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Such automated storage and retrieval systems may include one or more ports located at an edge of the three-dimensional grid, for example at floor level. Such port(s) may receive bins from the three-dimensional grid. The port(s) may provide an area for product items (sometimes referred to herein as "objects") to be picked from bins or placed into bins. This picking and placing may be done by a robotic arm located at the port, or by a manual picker standing at the port. Accordingly, such port(s) enable product items to be communicated to/from the three-dimensional grid.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5a shows a side-view of a first port for use with the storage system of Fig. 1;
Fig. 5b shows a side-view of a second port for use with the storage system of Fig. 1;
Fig. 6 is a block diagram showing components of a port controller hardware component for controlling operation of a port according to Fig. 5a or Fig. 5b;
Fig. 7 is a flow chart showing a first method according to the present disclosure;
Fig. 8 is a flow chart showing a second method according to the present disclosure;
Fig. 9 is a flow chart showing a third method according to the present disclosure;
Fig. 10 is a flow chart showing a fourth method according to the present disclosure;
Fig. 11 is a flow chart showing a fifth method according to the present disclosure; and
Fig. 12 is a flow chart showing a sixth method according to the present disclosure.

Like reference numerals are used for like components throughout the figures.

### DETAILED DESCRIPTION

In overview, the present disclosure relates to a port for use with an automated storage and retrieval system. The port comprises: a receiving area configured to receive a bin; a camera configured to capture images of bins received at the receiving area; and a computer system configured to analyse images received from the camera. The computer system may further be configured to: detect the presence of a bin at the receiving area; and cause the camera to capture images of the receiving area, for analysis by the computer system, when it is detected that a bin is located at the receiving area. Accordingly, the present disclosure may provide a means for monitoring bins of an automated storage and retrieval system from the port. As will be described in the descriptions that follow, the analysis and/or monitoring may be used by the computer system to one or more of: perform analysis of bin contents; select, based on a type of product item ("object") in a bin received at the receiving area, between manual picking and robotic picking at the port; activate, based on a type of an object or a location of an object in a bin received at the receiving area, light projection at the port to aid manual picking; control, based on a type of an object or a location of an object detected in a bin received at the port, a robotic picking arm located at the port; detect an anomaly in a bin received at the port; and/or perform a remedial action to remedy any such anomaly.

Accordingly, the port according to the present disclosure helps to improve object picking at the port, and/or helps to improve system function by detecting and/or addressing anomalies detected in bins at the port. Efficiency and/or reliability of automated storage and retrieval system operation is thereby improved.

### Automated storage and retrieval system overview

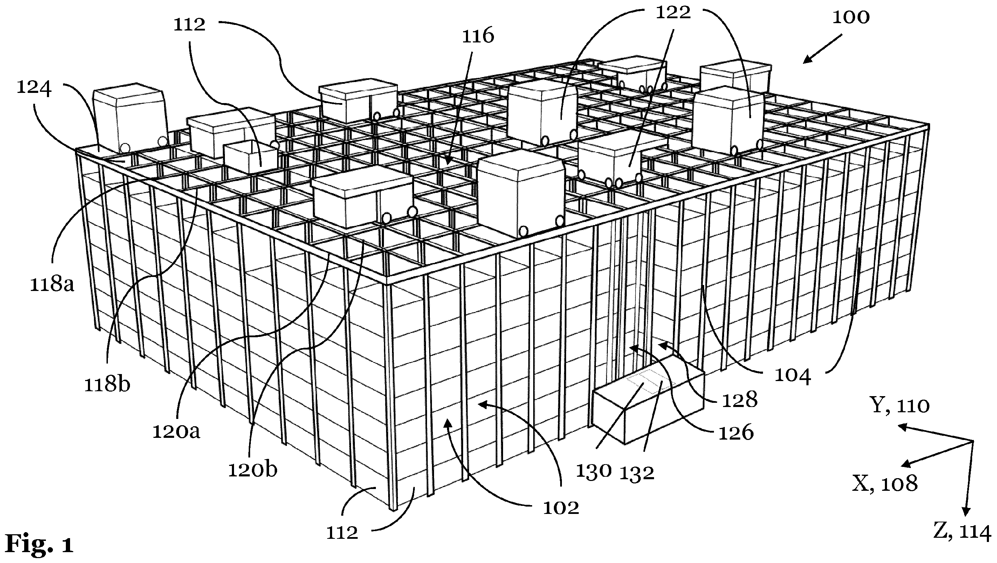

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 located adjacent to the grid, at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column. Each port 130, 132 may comprise a receiving area for receiving a bin from the port column or conveyor. Each receiving area may comprise an opening through which contents of bins received in the receiving area can be accessed.

The ports 130, 132 may function as access stations for processing of object(s) stored in bins 112, such as picking stations for adding objects to, or removing objects from, bins 112. At least some of the ports 130, 132 may include a robotic arm for automated object picking. Additionally or alternatively, at least some of the ports 130, 132 may be configured as a workstation for manual object picking.

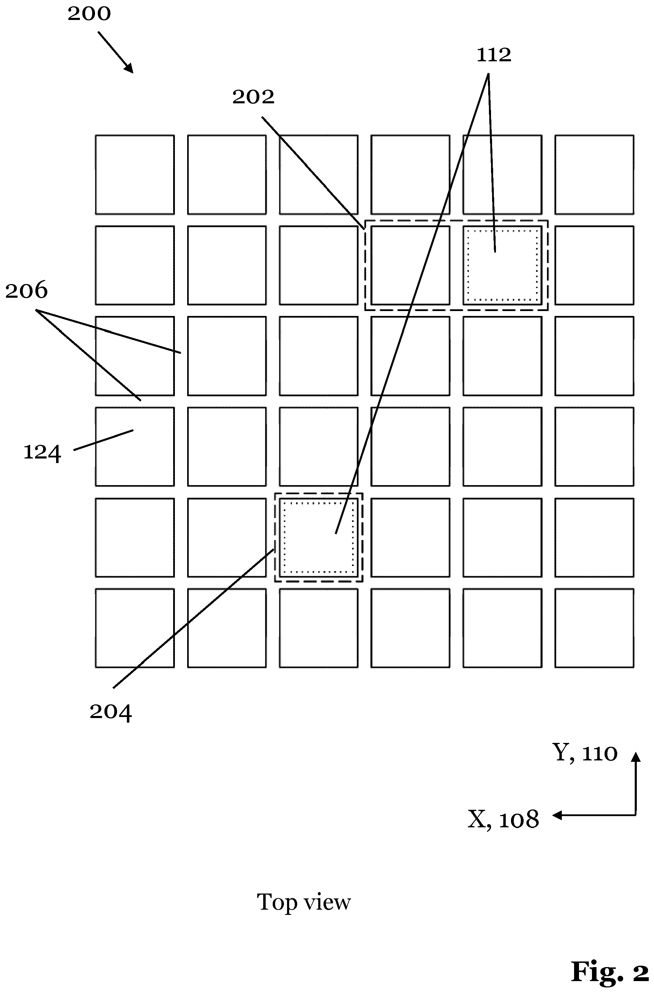

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

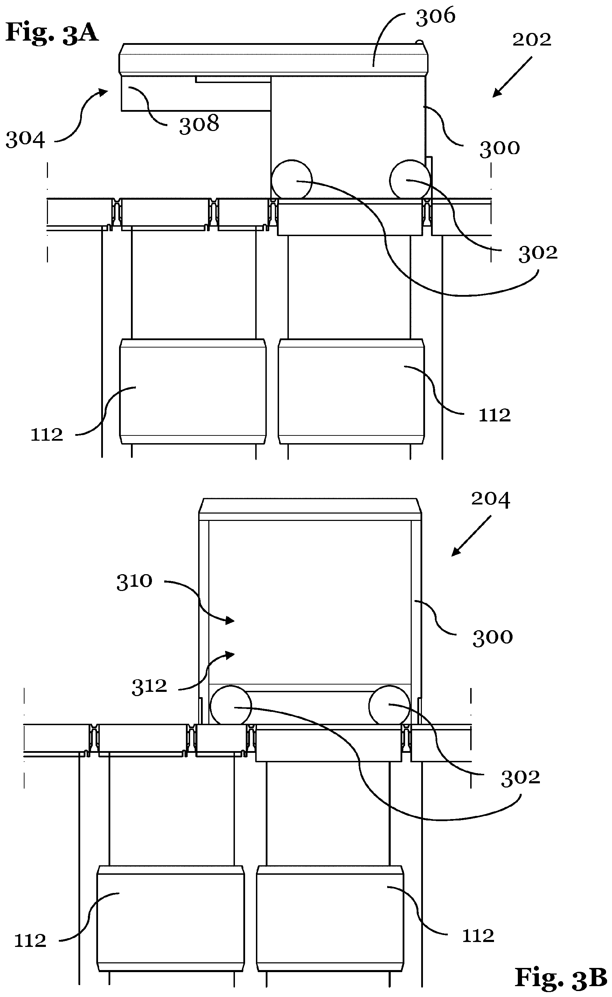

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

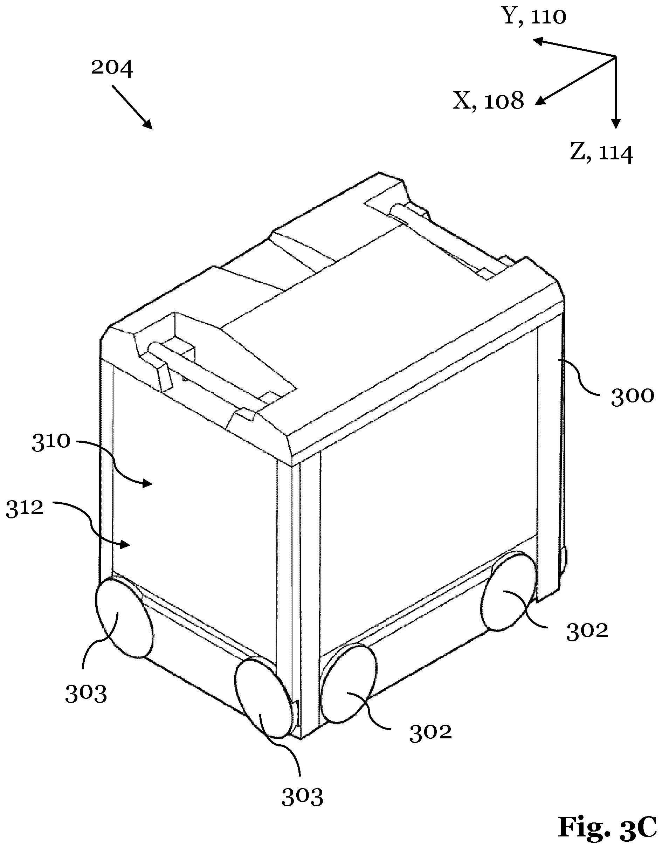

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

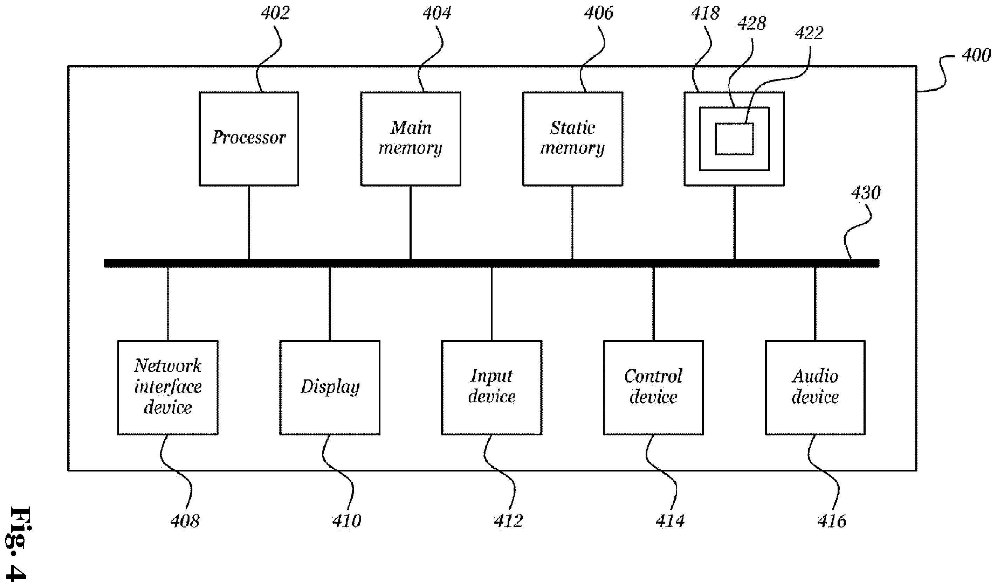

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 for subsequent processing (e.g. for object picking). In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

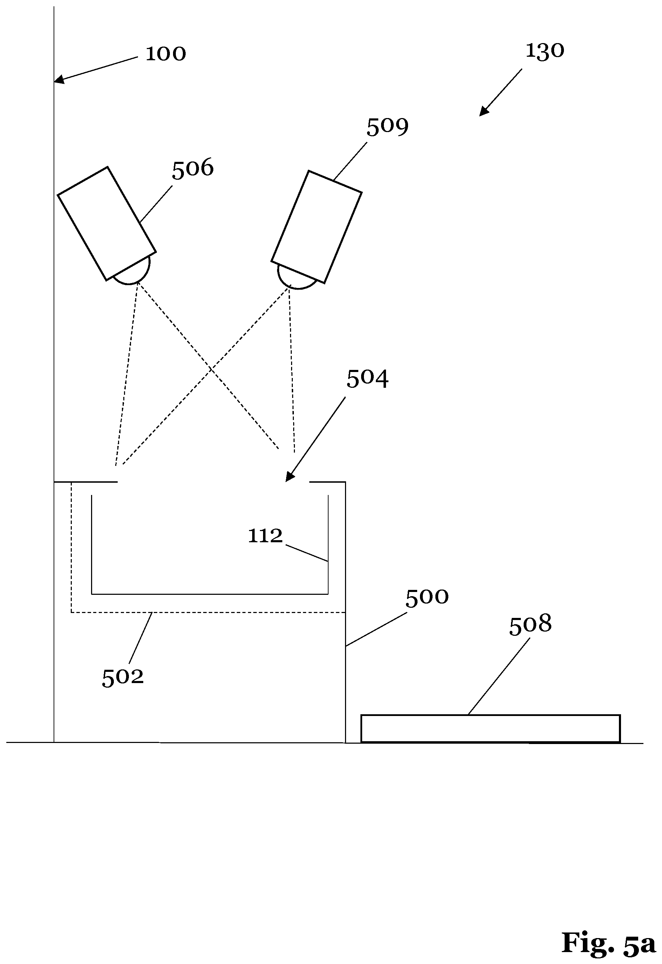

Fig. 5a shows a port 130 for use with the automated storage and retrieval system of Fig. 1. As shown in Fig. 1, the port 130 may be located at an edge of the grid 100, at ground level. The port 130 of Fig. 5a is configured as a workstation for manual object picking.

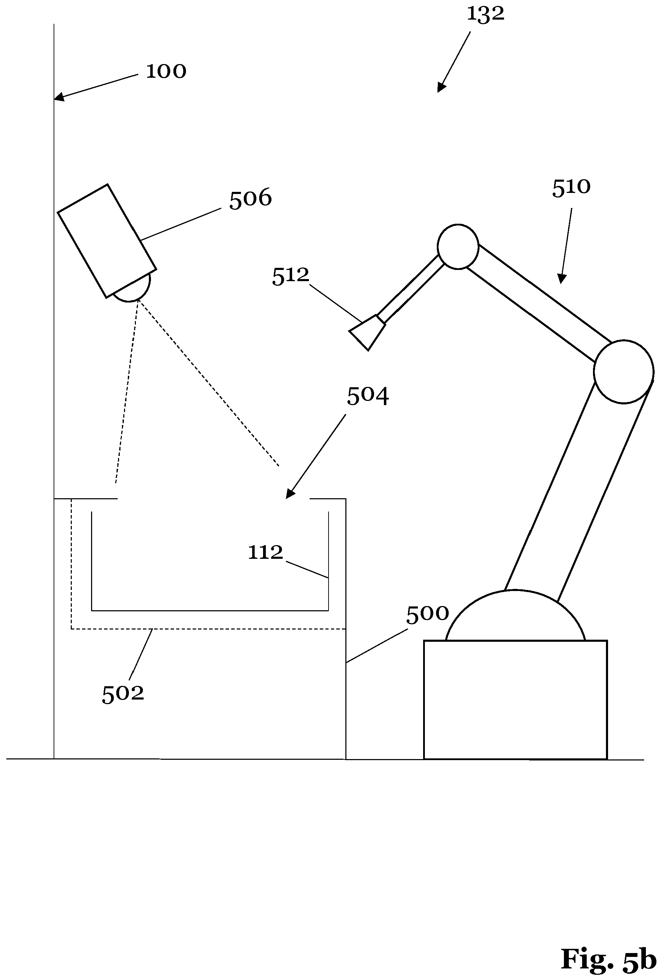

Fig. 5b shows a port 132 for use with the automated storage and retrieval system of Fig. 1. As shown in Fig. 1, the port 132 may be located at an edge of the grid 100, at ground level. The port 132 of Fig. 5b comprises a robotic arm 510 for automated object picking.

One or both of the ports 130, 132 may be used with an automated storage and retrieval system. Ports 130, 132 may in some cases be provided as standalone units for use with automated storage and retrieval systems.

Turning to Fig. 5a, the port 130 includes a housing 500, which conceals a bin receiving area 502. An opening 504 in an upper surface of the housing 500 reveals the bin receiving area 502. Accordingly, a bin 112 received at the bin receiving area 502 can be accessed through the opening 504. A conveyor mechanism (also not shown) may be provided for transporting bins 112 to/from the receiving area 502. A detection switch (also not shown) may be provided at the receiving area 502. The detector switch can be a pressure switch or other type of switch, configured to detect the presence of a bin 112 in the receiving area 502. For example, when a bin 112 is received in the receiving area 502, the switch will be activated, thereby providing a signal when a bin is received in the receiving area.

A cover (not shown) may be provided over the opening 504. The cover may be manually openable by a user, or may open automatically. Where the cover is manually openable, it may be locked in the closed position when a bin 112 is not present in the receiving area 502. Where the covering opens automatically, this may be done when a bin 112 is present in the receiving area 502. Accordingly, the opening 504 may be closed when a bin 112 is not present in the receiving area 502 and when a bin 112 is being moved to/from the receiving area 502. This improves safety. The upper surface of the housing 500 in which the opening 504 is provided is situated at approximately waist height, for optimised manual object picking. An optional platform 508 is provided at floor level, for a manual picking operator to stand on.

A camera 506 is provided above the opening 504, and arranged to take images of bins 112 at the receiving area 502. A light projector 509 is also provided above the opening, for projecting light into the opening. The light projector 509 is arranged for controllably projecting light to specific areas within the opening 504. Accordingly, the light projector 509 is useable to illuminate specific objects to be picked by the manual picking operator.

Turning to Fig. 5b, the port 132 shares many components with port 130 as shown by the common reference numerals. The port 132 may also include the detector switch of Fig. 5a and/or the conveyor mechanism of Fig. 5a. However, the platform 508 and the light projector 509 are dispensed with. In place of the platform 508 and light projector 509, a robotic picking arm 510 is provided, for picking objects from the bin 112 and/or placing objects in the bin 112. In the depicted example, the robotic picking arm 510 includes a suction cup 512 at its distal end, for picking items up from the bin 112 using suction. However, as the reader will understand, a vice-like gripper may alternatively be used at the distal end of the robotic picking arm 510. In some examples, a plurality of robotic picking arms may be provided, each having a different picking mechanism at its distal end. Alternatively, the single picking arm may be configured with multiple picking means at its distal end. Alternatively, the single picking arm may be configurable with different picking means at its distal end.

In a further example, a port may be provided in which the features of Figures 5a and 5b are combined. That is to say, a robotic arm 510 may be provided in addition to a light projector 509 and optionally a platform 508. In such an example, either manual picking or robotic picking can be used as required.

Images captured by the camera 506 are sent to the processing system 400, for processing by the processing system 400. Where a light projector 509 is present, commands for controlling projection of light are sent to the projector 509 from the processing system 400. Where a robotic arm 510 is present, commands for controlling operation of the robotic arm 510 are sent to the robotic arm 510 from the processing system 400. Operation of the processing system 400 for operating ports as described above is described below.

### Description of specific improvements

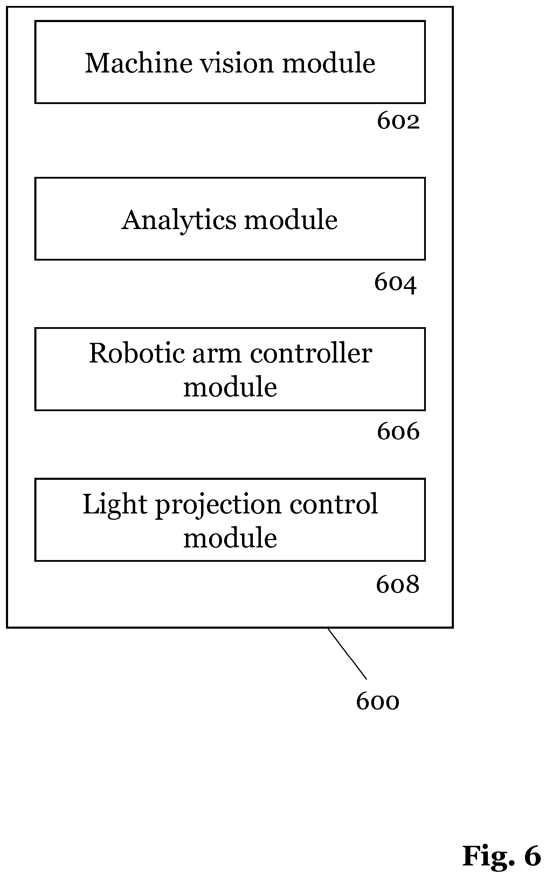

Fig. 6 is a block diagram showing components of a port controller hardware component 600 for controlling operation of port 130 and/or port 132. The port controller hardware component 600 may be part of the processing system 400. As shown, the port controller 600 comprises one or more of a machine vision module 602 configured to analyse images received from the camera 506, an analytics module 604 configured to perform system analytics based on information received from the machine vision module 602, a robotic arm controller module 606 configured to control operation of the robotic arm 510, and a light projection controller module 608 configured to control operation of the light projector 509. Therefore, the port controller receives images from the camera 506, performs processing and analysis based on those images, and then controls one or both of the light projector 509 and the robotic arm 510 based on that processing and analysis.

Machine vision module 602 is configured to analyse images from the camera 506, identify types of objects in the images, and identify locations of objects within the images. Accordingly, based on images received from the camera 506, the machine vision module 602 is able to determine types and locations of objects within a bin 112 located in the receiving area 502. The machine vision module may utilise image recognition to recognise types of objects and/or locations of objects in the bin 112, based on images received from the camera 506. For example, the machine vision module 602 may be configured to first identify locations of objects in an image, and then classify each object to determine the object types. Identifying locations of objects in an image may be done by raster scanning of the image, and returning values of 1 (indicating the presence of an object at the raster location) or 0 (indicating the absence of an object at the raster location). Machine learning models, such as support vector machine models, may then be used to classify the objects identified at the locations. For example, where bins 112 are used to store fruit, support vector machine models which have been trained on training data for different types of fruit may be used - such as a support vector machine model trained on images of oranges, a support vector machine model trained on images of bananas, etc. The support vector machine models can therefore be used to classify each object as an orange, a banana, etc. As the reader will understand, the types of models used will depend on the use case. In this use case, where a bin 112 containing fruit is received in the receiving area 502, the machine vision module can determine the locations of objects in the bin 112, and then classify each object to determine the type of fruit. To continue the above use-case, support vector machine models may be employed which are trained to recognise healthy fruit and perished fruit, to thereby identify perished fruit which may need to be removed from a bin 112. As the user will understand, this is just one use case, and the models used will be selected based on the specific use case.

Analytics module 604 may be configured to perform one or more functions, including: compiling bin contents information for each bin based on object information received from the machine vision module 602, and storing the bin contents information to memory; and analysing manual picking behaviours for each picking operator based on information from the machine vision module 602, and recording the manual picking behaviours to memory. Accordingly, the analytics module 604 may enable inventory to be monitored based on images from the camera. The analytics module 604 may also enable picking performance and/or picking accuracy of manual picking operators to be monitored. The analytics module 602 may further be configured to analyse stored information - such as stored manual picking behaviours - to determine an optical picking operation. For example, the analytics module may be configured to identify patterns in stored manual picking behaviours in order to inform picking operations. Past picking behaviours may therefore be leveraged so as to improve future picking operations. As an example, the analytics module 604 may use machine learning to identify patterns of behaviour in manual picking, such as areas of the bin 112 for which a user's picking is slower than in other areas of the bin. By leveraging this learned information, the speed of future picking can be improved. In this example, the analytics module may group previous picking operations into four categories - a first category in which the item is picked from a first (e.g. top left) corner of the bin, a second category in which the item is picked from a second (e.g. top right) corner of the bin, a third category in which the item is picked from a third (e.g. bottom right) corner of the bin, and a fourth category in which the item is picked from a fourth (e.g. bottom left) corner of the bin. By categorising picking operations in this way, and recording a picking time for each picking operation, the system can - for a given user - rank the four corners of the bin in terms of picking time. This information can then be stored in order to preferentially prompt a user to pick an object from the optimal corner, thereby improving picking times. As the reader will understand, this is just one form of picking optimisation achievable using a port according to the present disclosure. Other picking optimisations are possible.

Methods performed by the port controller 600 will now be described.

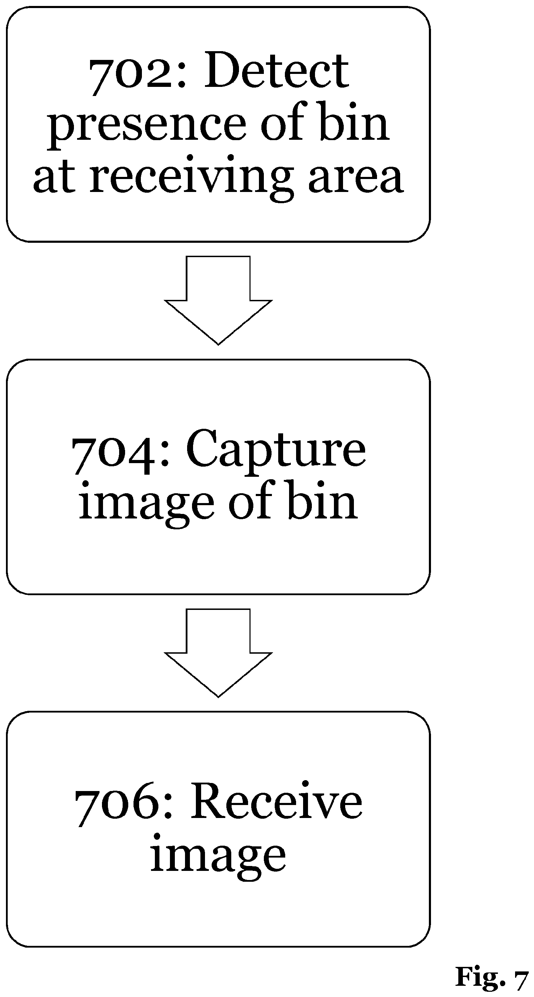

Fig. 7 is a flow chart showing a first method according to the present disclosure.

At step 702, the port controller 600 detects the presence of a bin 112 in the receiving area 502. This detection may be done based on a signal received from the detector switch. Alternatively, this detection may be done based on a signal received from the camera 506.

At step 704, based on detecting the presence of the bin 112 at the receiving area 502, the port controller 600 causes the camera 506 to capture an image of the bin 112.

At step 706, the port controller 600 receives the image from the camera 506.

As the reader will understand, the method of Fig. 7 may be used as a preliminary step in many of the methods that follow.

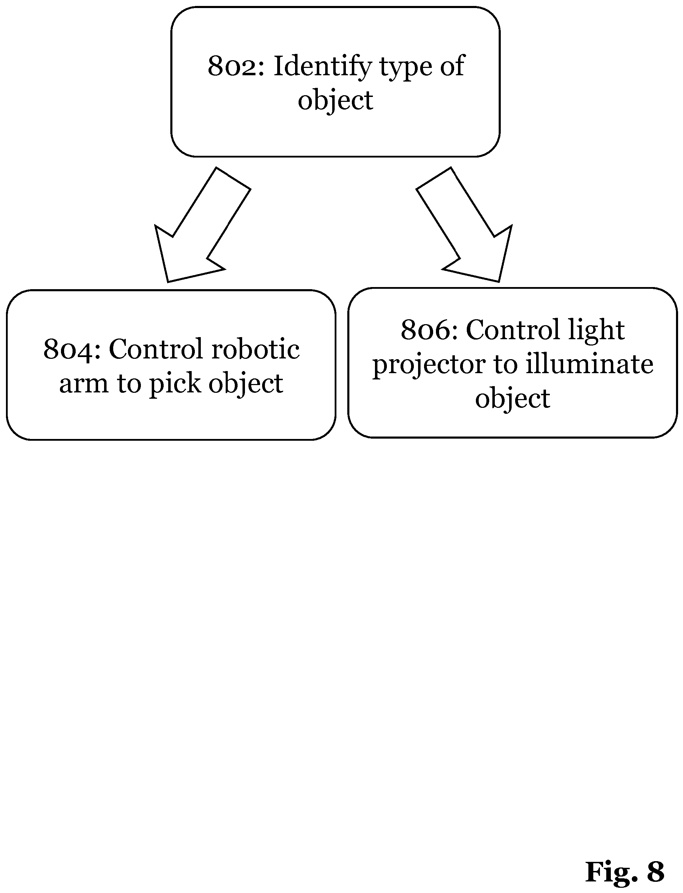

Fig. 8 is a flow chart showing a second method according to the present disclosure. The method of Fig. 8 may be performed following the method of Fig. 7.

At step 802, the machine vision module 602 identifies, based on the image, a type of object in the bin 112. For example, the machine vision module 602 may determine whether the object is of a first type which is conducive to robotic picking, or of a second type which is conducive to manual picking. As an example, an object which is conducive to robotic picking may be an object having a regular shape, while an object which is conducive to manual picking may be an object having an irregular shape.

At step 804, responsive to determining that the object is of the first type, the robotic arm controller module 606 controls the robotic arm 510 to pick the object.

At step 806, responsive to determining that the object is of the second type, the light projection control module 608 controls the light projector 509 to illuminate the object for manual picking.

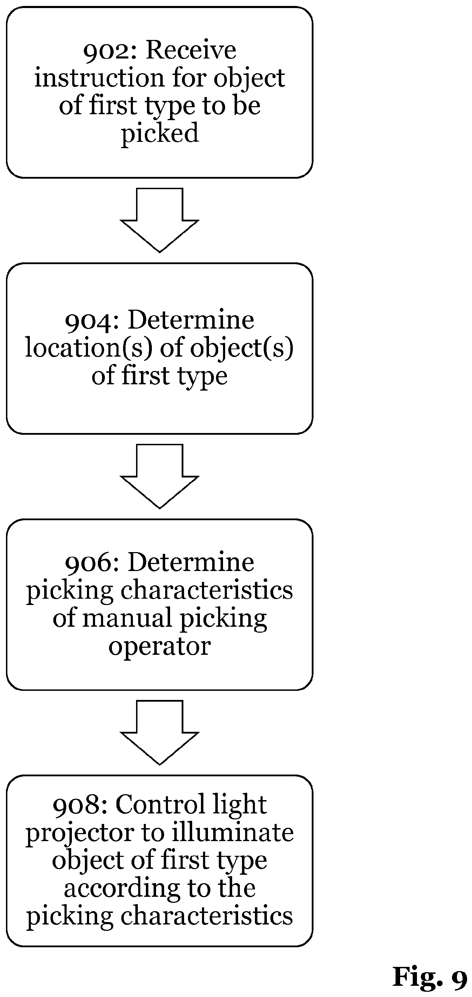

Fig. 9 is a flow chart showing a third method according to the present disclosure. The method of Fig. 9 pertains to manual picking situations. Therefore, the method of Fig. 9 may be performed after step 706 in the case of a port 130 according to Fig. 5a for manual picking; or may be performed after determining that manual picking is to be performed (step 802) in the case of a port having both manual and robotic picking capabilities.

At step 902, the port controller 600 receives an instruction for an object of a first type to be picked from the bin 112.

At step 904, the machine vision module 602 determines, based on an image received from the camera 506, location(s) of object(s) of the first type within the bin 112. For example, the machine vision model 602 may determine, based on the image received from the camera 506, that a first object of the first type is located at a first region of the bin 112 and that at a second object of the first type is located at a second region of the bin 112.

At step 906, the analytics module 604 determines, based on previously determined manual picking behaviour information, picking characteristics of a manual picking operator working at the port. For example, analytics module 604 may determines, based on the previously determined manual picking behaviour information, the that the manual picking operator working at the port picks more quickly from the first region than from the second region.

At step 908, the light projection control module 608 instructs the light projector 509 to illuminate an object of the first type according to the picking characteristics. For example, the light projection control module 608 may instruct the light projector 509 to illuminate the first object located in the first region, to thereby prompt the operator to pick the first object from the first region.

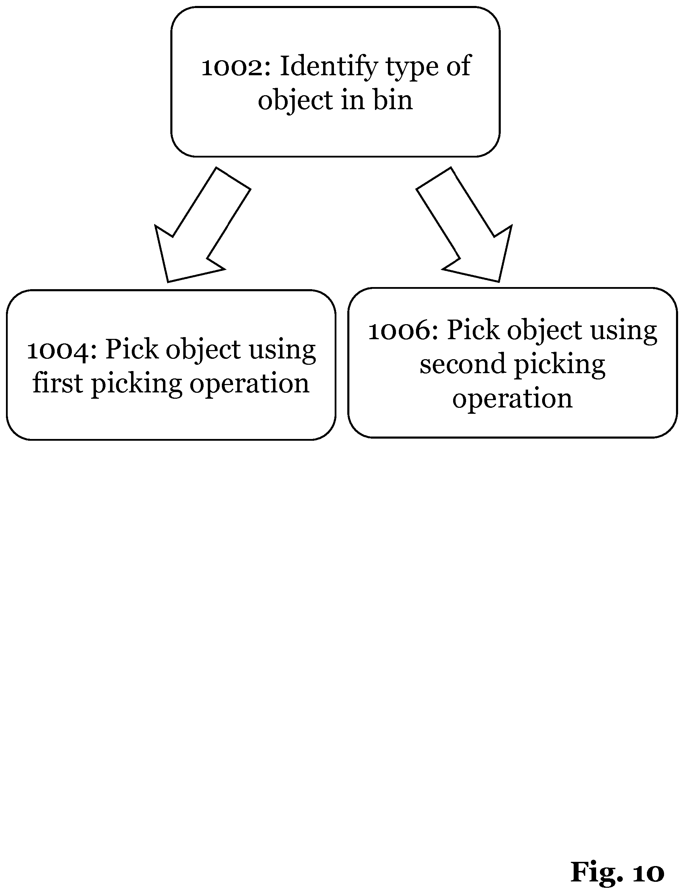

Fig. 10 is a flow chart showing a fourth method according to the present disclosure. The method of Fig. 10 pertains to robotic picking situations. Therefore, the method of Fig. 10 may be performed after step 706 in the case of a port 132 according to Fig. 5b for robotic picking; or may be performed after determining that robotic picking is to be performed (step 802) in the case of a port having both manual and robotic picking capabilities.

At step 1002, the machine vision module 602 identifies, based on the image, a type of an object in the bin 112. For example, the machine vision module may determine whether the object is of a first type which is conducive to robotic picking using a first picking attachment (such as a suction cup), or of a second type which is conducive to robotic picking using a second picking attachment (such as a vice-like gripper). As an example, an object which is conducive to robotic picking using a suction cup may be an object having a regular shape, while an object which is conducive to robotic picking using a vice-like gripper may be an object having an irregular shape.

At step 1004, responsive to determining that the object is of the first type, the robotic arm controller module 606 controls the robotic arm 510 to pick the object using a picking operation of a first type, the picking operation of the first type being suitable for picking objects of the fist type. For example, the robotic arm controller module 606 may control the robotic arm 510 to pick the object using a picking attachment of the first type.

At step 1004, responsive to determining that the object is of the second type, the robotic arm controller module 606 controls the robotic arm 510 to pick the object using a picking operation of a second type, the picking operation of the second type being suitable for picking objects of the second type. For example, the robotic arm controller module 606 may control the robotic arm 510 to pick the object using a picking attachment of the second type.

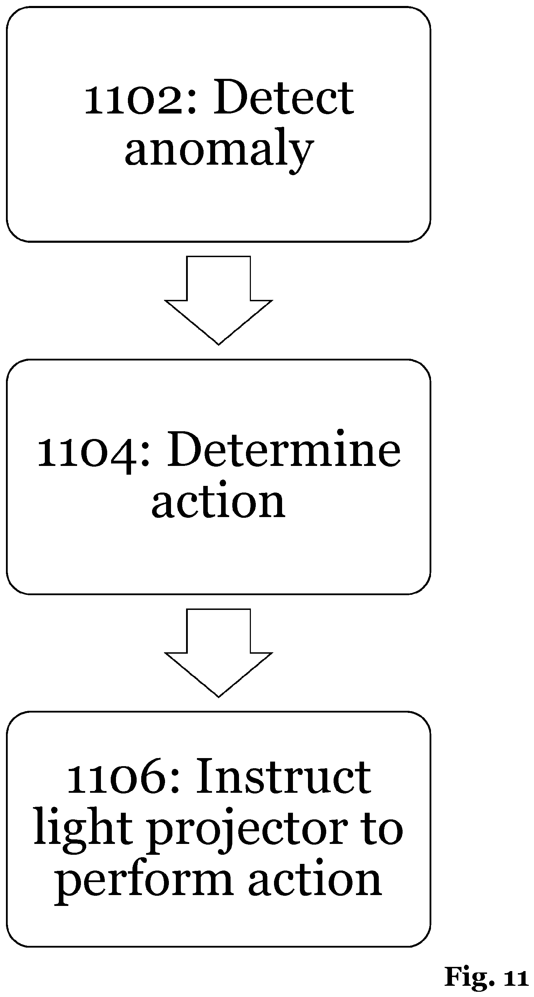

Fig. 11 is a flow chart showing a fifth method according to the present disclosure. The method of Fig. 11 pertains to manual picking situations. Therefore, the method of Fig. 11 may be performed after step 706 in the case of a port 130 according to Fig. 5a for manual picking; or may be performed after determining that manual picking is to be performed (step 802) in the case of a port having both manual and robotic picking capabilities.

At step 1102, the machine vision module 602 detects, based on an image received from the camera 506, an anomaly associated with the bin 112. In a first use case, the anomaly may be detection of a perished fruit item in the bin 112. In a second use case, the anomaly may be a malfunctioning electrical component in the bin 112, for example based on identifying a high-temperature region (indicative of a malfunctioning electrical component) in the bin 112. In a third use case, the anomaly may be an overfilling of the bin 112. In a fourth use case, the anomaly may be a discrepancy between a reported (actual) weight of the bin (the reported weight being reported by scales under the receiving area 502) and a calculated weight of the contents (the calculation being based on an output from the machine vision module 602).

At step 1104, the analytics module 604 determines, based on the anomaly, an action to take to address the anomaly. In the first use case, the action may be removal of the perished fruit item from the bin 112. In the second use case, the action may be removal of the malfunctioning electrical component from the bin 112. In the third use case, the action may be the removal of excess objects from the bin 112. In the fourth use case, the action may be the generation of a system alert.

At step 1106, the light projection control module 608 causes the light projector 509 to illuminate the bin to prompt a manual picker at the port to perform the action. For example, in the first second and third use cases, the action may comprise illuminating the object(s) to be removed from the bin 112.

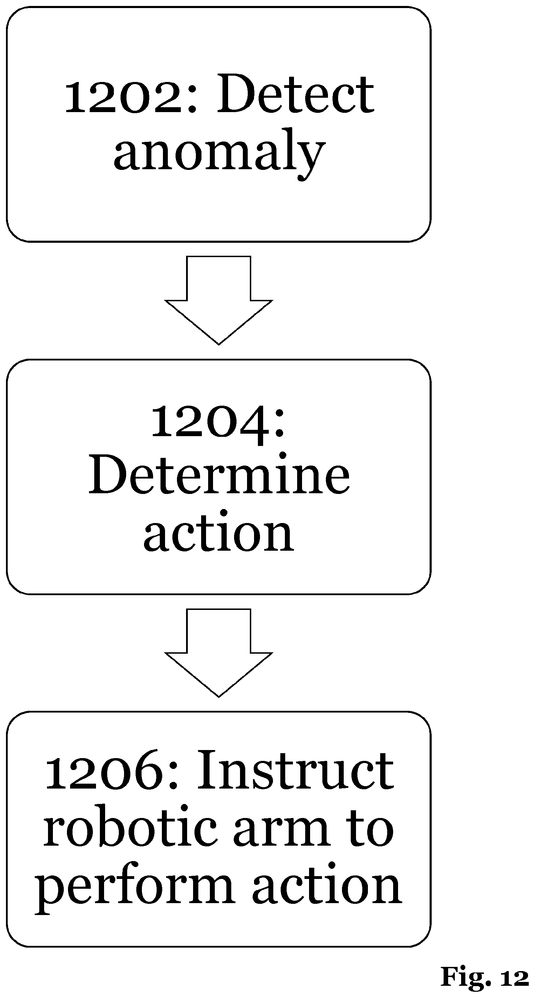

Fig. 12 is a flow chart showing a sixth method according to the present disclosure. The method of Fig. 12 pertains to robotic picking situations. Therefore, the method of Fig. 12 may be performed after step 706 in the case of a port 132 according to Fig. 5b for robotic picking; or may be performed after determining that robotic picking is to be performed (step 802) in the case of a port having both manual and robotic picking capabilities.

At step 1202, the machine vision module 602 detects, based on an image received from the camera 506, an anomaly associated with the bin 112. The anomaly may be the presence of a sub-standard object within the bin 112. In a first use case, the anomaly may be the presence of a perished fruit item in the bin 112. In a second use case, the anomaly may be the presence of a malfunctioning electrical component in the bin 112, for example based on identifying a high-temperature region (indicative of a malfunctioning electrical component) in the bin 112. In a third use case, the anomaly may be an overfilling of the bin 112 (e.g. the presence of at least one excess object in the bin 112). In a fourth use case, the anomaly may be a discrepancy between a reported (actual) weight of the bin (the reported weight being reported by scales under the receiving area 502) and a calculated weight of the contents (the calculation being based on an output from the machine vision module 602).

At step 1204, the analytics module 604 determines, based on the anomaly, an action to take to address the anomaly. In the first use case, the action may be removal of the perished fruit item from the bin 112. In the second use case, the action may be removal of the malfunctioning electrical component from the bin 112. In the third use case, the action may be the removal of excess objects from the bin 112. In the fourth use case, the action may be the generation of a system alert.

At step 1206, the robotic arm controller module 606 instructs the robotic arm 510 to perform the action. For example, in the first second and third use cases, the action may comprise removing the object(s) to be removed from the bin 112.

In a further example, the system may select between the method of Fig. 11 or the method of Fig. 12 based on a type of object associated with the anomaly. For example, if the object associated with the anomaly is of a first type which is conducive to robotic picking, step 1104 may be performed. On other hand, if the object associated with the anomaly is of a second type which is conducive to manual picking, step 1204 may be performed instead. Therefore, a method according to the present disclosure may start with step 1102 (detect an anomaly); then proceed to a step of determining, based on the image, whether an object associated with the anomaly is of a first type which is conducive to robotic picking or of a second type which is conducive to manual picking; and then proceed either to step 1104 or 1204 based on the type of object associated with the anomaly. That is, the method may proceed to step 1104 when it is determined that the object associated with the anomaly is conducive to manual picking, and proceed to step 1204 when it is determined that the object associated with the anomaly is conducive to robotic picking.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A port (130, 132) for use with an automated storage and retrieval system, the port comprising:
a bin receiving area (502) configured to receive a bin (112);
a camera (506) located above the receiving area and directed towards the receiving area; and
a computer system (600) configured to:
detect the presence of a bin in the receiving area;
responsive to detecting the presence of a bin in the receiving area, receive a signal from the camera, the signal indicative of contents of the bin;
analyse the signal to detect an anomaly associated with the contents of the bin;
determine, based on the anomaly, an action to take; and
issuing a control command to implement the action.

2. The port of claim 1, further comprising a light projector (509) arranged above the receiving area and directed towards the receiving area, wherein the action comprises illuminating the anomaly.

3. The port of claim 2, wherein the anomaly comprises the presence of a sub-standard object within the bin.

4. The port of claim 2, wherein the anomaly comprises the presence of at least one excess object in the bin, and wherein the action comprises illuminating the at least one excess object.

5. The port of claim 1, further comprising a robotic arm (510) for removing objects from the bin, wherein issuing the action comprises removing the anomaly using the picking arm.

6. The port of claim 5, wherein the anomaly comprises the presence of a sub-standard object within the bin.

7. The port of claim 5, wherein the anomaly comprises the presence of at least one excess object in the bin, and wherein the action comprises illuminating the at least one excess object.

8. The port of claim 1, further comprising a light projector (509) arranged above the receiving area and directed towards the receiving area, and a robotic arm (510) for removing objects from the bin, wherein the method comprises selecting between one of the light projector and the robotic arm for implementing the action.

9. The port of claim 8, further comprising determining, based on the signal, a type of object associated with the anomaly.

10. The port of claim 9, further comprising selecting the robotic arm for implementing the action when the object is of a first type which is conducive to robotic picking, wherein the action comprises removing the anomaly from the bin using the robotic picking arm.

11. The port of claim 9 or claim 10, further comprising selecting the light projector for implementing the action when the object is of a second type which is conducive to manual picking, wherein the action comprises illuminating the anomaly.

12. A method of operating a port associated with an automated storage and retrieval system, the port comprising a bin receiving area (502) configured to receive a bin (112) and a camera (506) located above the receiving area and directed towards the receiving area, the method comprising:
detecting the presence of a bin in the receiving area;
responsive to detecting the presence of a bin in the receiving area, receiving a signal from the camera, the signal indicative of contents of the bin;
analysing the signal to detect an anomaly associated with the contents of the bin;
determining, based on the anomaly, an action to take; and
issuing a control command to implement the action.

13. The method of claim 12, wherein the method further comprises steps according to any of claims 2 to 11.

14. A computer-readable medium having stored thereon instructions which, when implemented by a processor, cause the processor to implement steps of:
detecting the presence of a bin in the receiving area;
responsive to detecting the presence of a bin in the receiving area, receiving a signal from the camera, the signal indicative of contents of the bin;
analysing the signal to detect an anomaly associated with the contents of the bin;
determining, based on the anomaly, an action to take; and
issuing a control command to implement the action.

15. The computer-readable medium of claim 14, wherein the instructions further cause the processor to implement steps according to any of claims 2 to 11.
